# EUROPEAN PATENT APPLICATION

(11) **EP 3 367 621 A1**
(43) Date of publication of application: **29.08.2018**
(21) Application number: 17158309.9
(22) Date of filing: 28.02.2017
(51) Int. Cl.: H04L 12/851, H04L 12/751, H04L 12/707, H04L 12/801, H04L 29/08, H04L 29/06

(54) **METHOD AND APPARATUS FOR LOCAL TRAFFIC ACCELERATION**

(71) Applicant: Intel Corporation, Santa Clara, California 95054 (US)
(72) Inventor: Deshpande, Mahipati, 560067 Bangalore, Karnataka (IN); Banerjee, Ritesh, 560067 Bangalore, Karnataka (IN)
(74) Representative: Goddar, Heinz J.

(57) **Abstract**

A method of local traffic acceleration is described, the method including: monitoring packet processing and header modification of a transport layer flow going through a transport stack path of an operating system (OS); determining whether the transport layer flow can be processed by a processing engine based on the monitored packet processing and header modification; if it is determined that the transport layer flow can be processed by the processing engine, determining whether a flow learning phase is completed, wherein the flow learning phase includes learning protocol parameters by a learning block, the protocol parameters required to process a packet of the transport layer flow by the processing engine; if it is determined that the flow learning phase is completed, processing the packet of the transport layer flow by the processing engine using the protocol parameters learned by the learning block; and forwarding the processed packet via a shortcut path; and proceeding with learning the protocol parameters by the learning block, if it is determined that the flow learning phase is not completed. An apparatus comprising a learning block and a processing engine is provided for local traffic acceleration of local (host) traffic flows to or from applications. A machine readable medium comprising a plurality of instructions that in response to being executed on a computing device cause the computing device to perform the method of local traffic acceleration is further provided.

## Description

### TECHNICAL FIELD

Embodiments described herein generally relate to traffic and networking protocol acceleration for local (host) traffic flows. Particularly, the present disclosure relates to a method of local traffic acceleration and an apparatus for local traffic acceleration. Furthermore, the disclosure relates to a machine readable medium comprising a plurality of instructions that in response to being executed on a computing device cause the computing device to perform the method of local traffic acceleration.

### BACKGROUND

The operating system protocol stack implements a multitude of network protocols, extensions, options and conditional handling, and has a high degree of interoperability with other devices and implementations. The operating system protocol stack also has functions like classification, firewall, address translation and packet mangling. All this results in a processor-intensive packet path to the application, where thousands of CPU cycles are required for an application to send or receive a packet to/from a network port via a device driver. The local traffic usually goes through all the layers of the OS network stack to reach the application including intermediate layers such as a bridge or a tunnel, a network layer, a transport layer and a socket. Currently different approaches are used to offload the CPU and improve a throughput in the local traffic path.

One approach uses offloading TCP/UDP (Transmission Control Protocol and User Datagram Protocol) large packet segmentation or fragmentation to hardware (HW). This approach allows partial offload by reducing packets per second seen by the network stack layers for the same throughput. However, large packets still have to traverse the whole packet path from the transport layer to the network layer and then to the link layer and undergo firewall and Quality of Service (QoS) handling in the stack. Therefore, the amount of cycles per packet is not reduced for large packets in this case, but only the amount of frames per second that the stack needs to process is reduced lowering the total CPU cycle requirement for a given throughput. This gives a partial benefit, but the CPU still limits the throughput, for example, for NAS (Network attached storage) traffic on gigabit and multi-gigabit interfaces like 10G Ethernet. Offloads also fail where various tunneling encapsulations like GRE or MPTCP or DS-lite are used, which get more common both on WAN interfaces and on WIFI. These offloads were meant for typical IP over Ethernet scenarios mainly.

Another approach is to offload full TCP/UDP/IP processing to hardware (HW) or firmware (FW) engines. This approach can potentially result in the highest offload and thereby highest throughput, but requires greatly reduced protocol extensibility and interoperability and compatibility with various hosts' protocol implementations. This approach is discouraged in any serious networking devices like a router or a gateway because of the above indicated disadvantages resulting in bugs in HW implementations which cannot be fixed unlike for software (SW) implementations in the OS stack. The MPTCP or other tunneling protocols and the use of new options and extension headers are not going to work seamlessly with such HW/FW implementations unless they are already supported in the engines. Even in that case interoperability and extensibility are not compulsorily provided. An ability to run enhanced security functions like malware detection, Intrusion Detection & Prevention, Stateful firewalling and others are severely constrained if not impossible with such an approach.

In both of the above described approaches, VPN and encrypted traffic flows typically cannot be handled or are majorly constrained (by HW implementation). In view of the above, one object of this application is to combine the feature-rich, interoperable, verified and 'upgradable' packet handling, and packet path from an OS protocol stack like Windows or Linux, with a 'shortcut' for majority of the packets in order to reduce processing cycles per packet and increase throughput and/or reduce CPU load. This is critical for local (host) applications like NAS functions (Windows File sharing) or network Speed Test utilities. Ideally, the reduced per-packet cycle requirement should be complementing the reduced packets per second that are visible to the stack for a given throughput to provide the highest throughput / reduced CPU load without compromising protocol compliance, extensibility and interoperability.

### BRIEF DESCRIPTION OF THE DRAWINGS

The specific features, aspects and advantages of the present disclosure will be better understood with regard to the following description and accompanying drawings where:
- Figure 1: shows a flow chart of a method of local traffic acceleration according to an embodiment of the present disclosure;
- Figure 2: shows a schematic overview of an apparatus for local traffic acceleration according to an embodiment of the present disclosure;
- Figure 3: shows a block diagram of the shortcut path and the slow path of the local traffic in the OS network stack;
- Figure 4: shows a flow chart of a learning logic for Tx and Rx flows;
- Figure 5: shows a flow chart of a transport layer Tx adaptation in the OS network stack;
- Figure 6: shows a flow chart of a transport layer Rx adaptation in the OS network stack;
- Figure 7: shows a block diagram of the shortcut path and the slow path of the local traffic in the OS network stack with acceleration hardware.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

The above described technical problems are solved by a computer-implemented method of traffic acceleration, an apparatus for traffic acceleration and a machine readable medium as defined in the independent claims. Preferred embodiments are defined in the dependent claims.

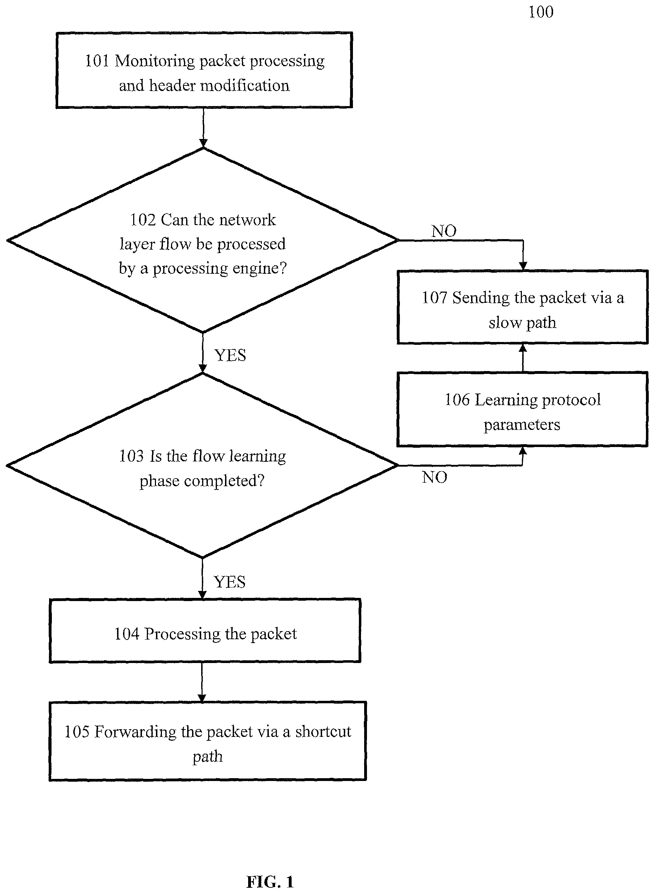

Figure 1 shows a flow chart of a method 100 of local traffic acceleration, i.e. traffic acceleration for local (host) traffic flows, in accordance with one of the embodiments of the present disclosure. The method 100 starts in item 101, where packet processing and header modification of a transport layer flow (a network flow) going through a network stack path of an operating system are monitored. In item 102 the method determines whether the transport layer flow can be processed by a processing engine based on the monitored packet processing and header modification. If it is determined in item 102 that the transport layer flow can be processed by the processing engine, the method proceeds with item 103 to determine whether a flow learning phase (a learning process) is already completed. The flow learning phase or the learning process includes learning by a learning block protocol parameters required to process a packet of the transport layer flow by the processing engine (required protocol parameters). If it is determined that the flow learning phase is completed, the method then proceeds to the processing of the packet of the transport layer flow by the processing engine using the protocol parameters learned by the learning block in item 104 and forwarding of the processed packet via a shortcut path in item 105. If it is determined that the flow learning phase is not completed, the method proceeds to item 106, where protocol parameters required to process the packet of the transport layer flow by the processing engine are learned by the learning block, and then the packet is forwarded via a slow path in item 107. If it is determined in item 102 that the transport layer flow cannot be processed by the processing engine, the method proceeds with forwarding the packet via the slow path in item 107.

The learned protocol parameters may be stored in a database to be used for processing packets of one or more subsequent transport layer flows and forwarding the processed packets for each of the one or more subsequent transport layer flows when the flow learning phase is completed.

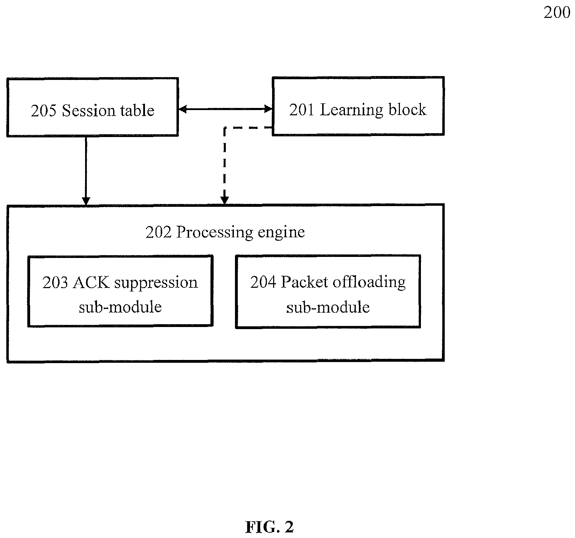

The method may be implemented on a server device, which may be implemented on at least one hardware device, such as one or more computer device. The method may also be implemented on a device as described with regard to Fig. 2, 3 or 7, especially on such devices as routers, modems and gateways.

Using the shortcut path which consumes significantly less cycles than a regular long path (also referred to as the slow path) the method provides an increased throughput and/or reduced CPU load for local application traffic in devices like routers or hosts. In this manner functionality, interoperability and correctness are not compromised, while typical high data rate flows are boosted through the shorter path, the so-called shortcut path or Application Litepath. This shortcut path may co-exist with and leverage other packet offload mechanisms like large packet offloads.

By monitoring transport layer flows through the OS stack path and then transferring the suitable packets to a shorter path (the shortcut path, which consumes significantly less cycles than a regular long path) between transport layers, such as TCP/UDP, in the stack to or from a network device driver, like an Ethernet port driver, the method provides an increased throughput and/or reduced CPU load for local application traffic in devices like routers or hosts.

In accordance with the described method the Operating System protocol stack processing path is not bypassed and proper handshaking and interoperability are insured. Furthermore, it does not decrease functionality of the network stack and/or introduce boundary case problems. This is achieved by ensuring that all flows first pass through the network stack path for several packets. During this phase, the learning block implementing the learning logic monitors and 'learns' about the packet processing and header modification. At the end of this phase, if the flow has typical (and suitable) packet processing and editing requirements, and can be processed in a processing engine implementing the shortcut logic, the flow is programmed into a session table. At this stage the packets of this flow pass through the shortcut path which reduces the number of cycles required for processing packets of the flow by 20% or more and improves throughput correspondingly. This addresses the main drawbacks of known traffic acceleration methods.

The shortcut path may be shortened in both directions as indicated below: by combining with layer2/layer 3 forwarding acceleration engines and treating the shortcut path as a physical port in the network, namely as a destination port for TX flows or as a source port for RX flows.

Network Port to Application direction:

```
 From
 Network Port → Network Interface Driver → Stack device Interface layer → Shortcut module
 → Transport Layer (TCP),
 To
 Network Port → Acceleration Engine → Shortcut module → Transport Layer (TCP)
```

Application to Network Port direction:

```
 From
 Transport Layer (TCP) → Shortcut Module → Stack Interface to device → Network Interface
 Driver → Network Port
 To Transport Layer (TCP) → Shortcut Module → Acceleration Engine → Network Port
```

In addition to the above core mechanism, the shortcut path may be further optimized by interfacing to available HW/FW acceleration engines and offloads, including, but not limited to the following:
1. Large Packet Offloads: Packet IP/TCP/UDP checksum offloads , Large Packet Send Offload, Large Packet Receive Offload;
2. Session/Flow based Offloads: Acceleration Routing and Bridging functions, Acceleration Tunnel Encapsulation functions, for example for PPPoE, GRE, IPSec, L2TP etc., TCP Ack Suppression, HW QoS functions.

Traditional packet acceleration approaches accelerate forwarded traffic in a device using session/flow table entries, but cannot handle locally terminated or originated traffic as in a host (or at least were not able to reduce significantly the processing cycle requirement in the software/OS path to/from local applications). According to the present disclosure this becomes possible by the following approach:
- Creation of a shortcut path in the OS network subsystem;
- Assigning a Physical Port Number to the shortcut path in the acceleration and data path of the system, so that packets can be addressed to/from this port in Acceleration session entries;
- Application shortcut logic to leverage session acceleration and other offload engines in both Network Interface to Application and Application to Network interface directions, minimizing cycle requirements for this module.

This approach further improves the throughput by another 10-20 %, since per packet processing cycles are minimized.

Another limitation in traditional packet acceleration approaches is related to the use of cryptography and VPNs in the flow. Usually, when the offload point is at the Transport layer, VPN tunnels operate at the network layer like IP, or at link layers, and VPN encapsulation and decapsulation cannot be applied for such a shortcut without adding a lot of implementation and verification efforts in the shortcut path, and also reducing its performance due to an additional large set of instructions needed for crypto operations. The described method solves this problem by leveraging acceleration mechanisms in HW or FW, which provide session acceleration, as well as VPN tunneling and crypto-operation support. The use of a physical port number for the shortcut path allows a compatible programming of acceleration modules and the shortcut path.

Thus, the disclosed method enables an increase of throughput of even VPN and encrypted flows to/from an application in the system. For example, a Samba file transfer over an IPSec tunnel can leverage the shortcut path to improve performance similar to a non-VPN use case. In case of a fully HW accelerated VPN tunnel support, it is possible to reach the same throughput for non-VPN and VPN flows with no cost in the CPU SW path for VPN encryption, or decryption.

Figure 2 shows an apparatus 200 for traffic acceleration in accordance with one of the embodiments of the present disclosure. The apparatus 200 comprises a learning block 201 and a processing engine 202. The learning block 201 is configured to monitor packet processing and header modification of a transport layer flow going through a network stack path of an operating system (OS) and determine whether the transport layer flow can be processed by the processing engine 202. The learning block is further configured, if it is determined that the transport layer flow can be processed by the processing engine 202, to determine whether a flow learning phase is completed, wherein the flow learning phase includes learning protocol parameters required to process a packet of the transport layer flow by the processing engine 202. The learning block is further configured to learn the required protocol parameters, if it is determined that the flow learning phase is not completed. The processing engine 202 is configured to process the packet of the transport layer flow using the learned protocol parameters and forward the processed packet via a shortcut path.

The processing engine 202 further comprises a TCP ACK suppression sub-module 203 and a packet offloading sub-module 204. These sub-modules help to boost throughput of the flows by reducing packet processing. If a hardware offload exists for the functions provided by the TCP ACK suppression sub-module 203 and the packet offloading sub-module 204, the hardware offload is used instead of these modules.

The processing engine 202 further comprises a session table 205 in which the transport layer flow may be recorded if it is determined that the transport layer flow can be processed by the processing engine. The session table 205 is a database in which the learning block 201 stores learnt information of all transport layer sessions. The processing engine 202 uses the information stored in the session table 205 to process and forward the packet to the destination.

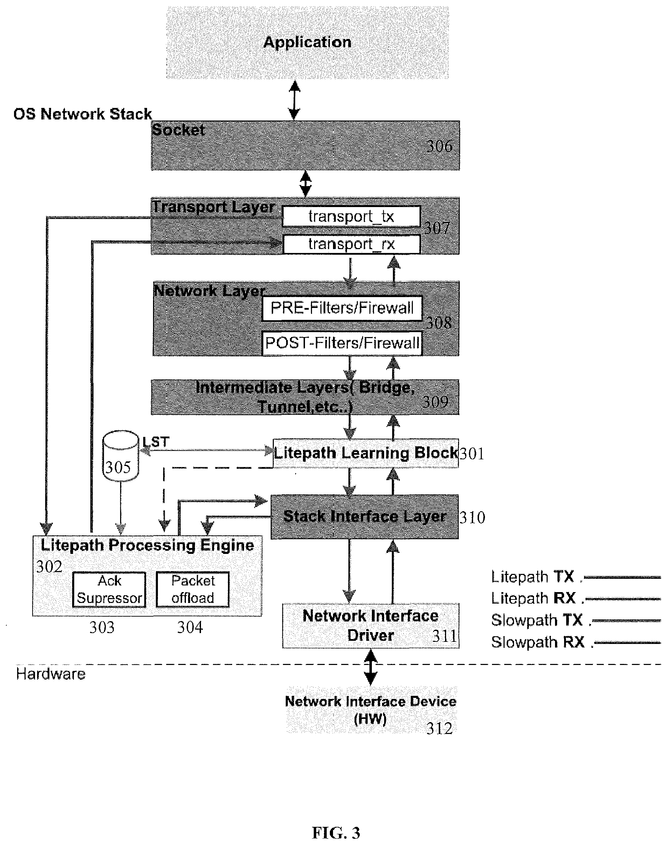

Two paths of transport layer flows (such as TCP or UDP) supported by the present disclosure are shown in figure 3.

A network interface device 312 shown in Fig. 3 is also referred to as NIC and represents the network hardware device. A network interface driver 311 is the device driver for the network device that interfaces with a stack interface layer 310. The stack interface layer 310 is the OS layer which interfaces with the OS network stack and network interface drivers and is located between them. The OS network stack includes a socket 306, a transport layer 307, a network layer 308 and intermediate layers 309.

The first path (shown as Slowpath Tx & Rx) is a regular network stack path traversing all layers and functional blocks of the OS network stack from the transport layer 307 to the network interface driver 311 and correspondingly to the network interface device 312 or vice-versa. The shortcut path is referred to as Application Litepath (indicated as Litepath Tx, Rx in Fig. 3) and runs from the transport layer 307 to the network interface driver 311 and correspondingly to the network interface device 312 or vice-versa in a shortcut mode. The shortcut path may go from the network interface driver 311 to the Litepath module which processes the packets and directly injects the transport layer packets like TCP segments into the transport layer 307 (transport_rx) bypassing all intermediate handling like in IP, bridge, PPP and other link layers. The shortcut path may further go from the transport layer 307 (transport_tx) directly to the Litepath module which processes the packet, for example, by adding IP and link layer headers before sending the packet to the network interface driver 311.

The Litepath module is shown as containing two modules: a Litepath learning block (LLB) 301 and a Litepath processing engine (LPE) 302. The LLB 301 intercepts the slow-path traffic. The LPE 302 is responsible for editing the packets using the information learnt from the LLB 301 and forwarding the packets to/from network interface from/to the transport layer 307. The LPE 302 also contains protocol specific handling functionality such as a TCP ACK suppression sub-module 303 and a packet offloading sub-module 304. These sub-modules help to boost throughput of the flows by reducing packet processing.

The LLB 301 stores learnt information of all transport layer sessions into a database called Litepath session table (LST) 305 and the LPE 302 uses the LST 305 to edit and forward the packet to the destination.

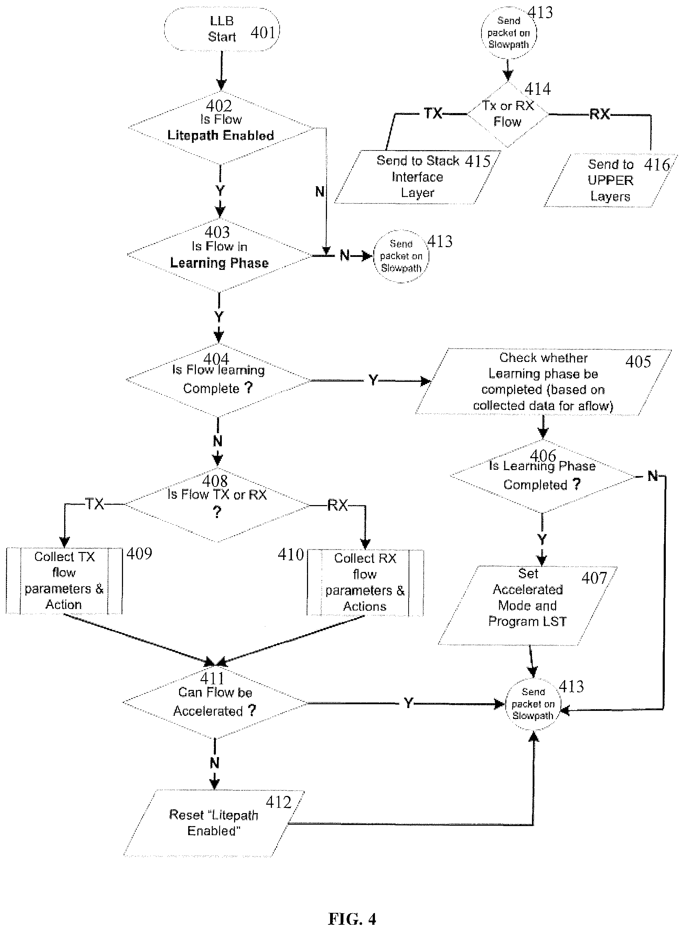

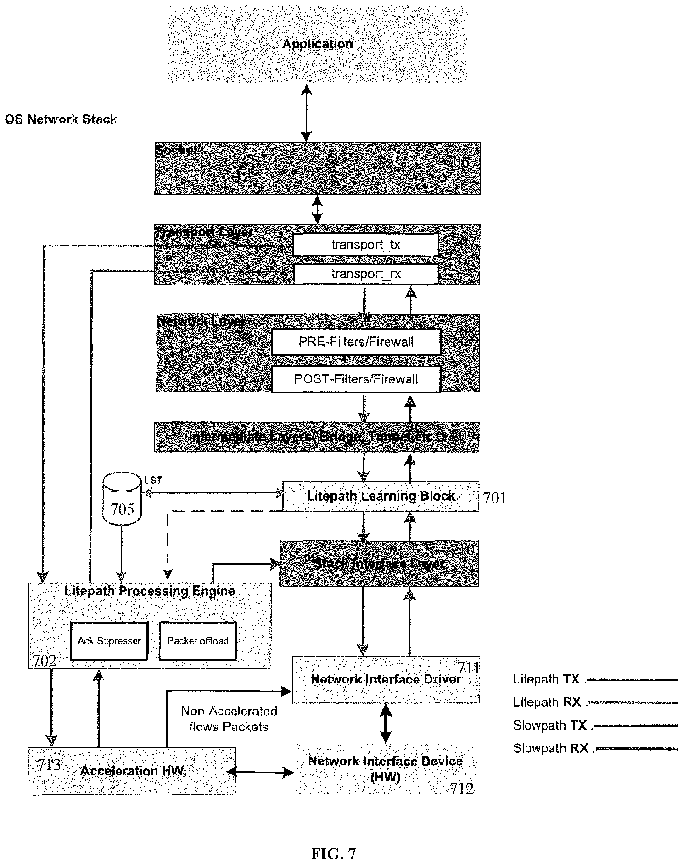

Figure 4 shows a flow chart of a learning logic performed by the learning block 201 shown in Fig. 2, the Litepath learning block 301 shown in Fig. 3, or the Litepath learning block 701 shown in Fig. 7 for Tx and Rx flows. During a learning phase the learning logic monitors and learns the packet processing and header modification. At the end of this phase, if the flow has typical or suitable packet processing and editing requirements and can be handled in the Litepath logic, the flow is programmed into the Litepath session table (LST). If, at any time during the learning phase, the flow cannot be processed by Application Litepath, it is marked as non-Litepath and no more packets of the non-Litepath flow are intercepted. If the Litepath processing engine can handle the flow, the Litepath learning block learns all protocol layer parameters and tunnel parameters that are required to construct, validate, encapsulate or decapsulate the packet of a flow. For a Tx session, the Litepath learning block collects protocol header parameters required to construct the complete packet of a given flow on top of transport layer data and for a Rx flow it collects parameters that are necessary to validate the received packet.

The learning logic of the LLB starts in item 401 and continues with determining whether the flow received by the LLB may be processed by the LPE in item 402. If it is determined that the flow is Litepath-enabled it is further determined whether the flow is in a learning phase in item 403. If it is determined that the flow is in the learning phase, the learning logic proceeds with determining whether the flow learning is complete in item 404. The flow packet is directly sent on the slow path (item 413) if it is determined in item 402 that the flow is not enabled to be processed by the LPE (i.e. not Litepath-enabled) or if it is determined in item 403 that the flow is not in the learning phase. If it is determined in item 404 that the flow learning is complete the learning logic further proceeds with checking whether the learning phase is to be completed in item 405. If the learning phase is to be completed it is further checked whether the learning phase is actually completed in item 406 and if the learning phase is completed the accelerated mode is set for the flow and the LST is programmed by recording the flow parameters to the LST in item 407. The flow packet may then be sent to the slow path (item 413). If it is determined in item 406 that the learning phase is not completed the flow packet may be also sent to the slow path, however, the flow parameters are not recorded in the LST in this case.

If it is determined in item 404 that the flow learning is not complete, it is further determined in item 408 whether the flow is a Tx flow or an Rx flow. Then the Tx flow parameters or the Rx flow parameters are collected in item 409 or in item 410 correspondingly. In item 411 it is determined whether the flow can be accelerated. If the flow can be accelerated the flow packet may be sent directly to the slow path. If the flow cannot be accelerated the Litepath-enabled state is reset for the flow in item 412 and the flow is then sent to the slow path in item 413.
After the flow packet is sent to the slow path in item 413 it is determined whether the flow is a Tx flow or an Rx flow in item 414 and the flow packet is then sent either to the stack interface layer in item 415 or to the upper layers of the stack in item 416.

The learning phase of a flow ends by one of:
a. A configured number of packets are seen by the Litepath learning block in the slow path;
b. Some packet inspection technology, like a Deep Packet Inspection (DPI) module, triggers the end of the learning phase by marking the packet/flow.
c. A flow is identified as non-Litepath.

The learning phase of the flow may also end by options a. and b. being simultaneously given.

In the learning phase all stack processing actions are carried out including firewall checks, classification and marking QoS class, priority etc. An external entity can be configured to indicate to the Litepath learning block not to consider a particular flow for acceleration through the Application Litepath. Such flows are marked as non-Litepath from the beginning of the flow. In this case no packets of the flows are intercepted by the Litepath learning block.

Once the learning phase ends, the flow may enter the accelerated mode, if it can be accelerated by the learning processing engine. By default all flows are marked as Litepath enabled. The Litepath learning block programs the accelerated flow into the Litepath session table (LST) and the transport layer connection is marked to indicate that the Tx/Rx flow is in the accelerated mode.

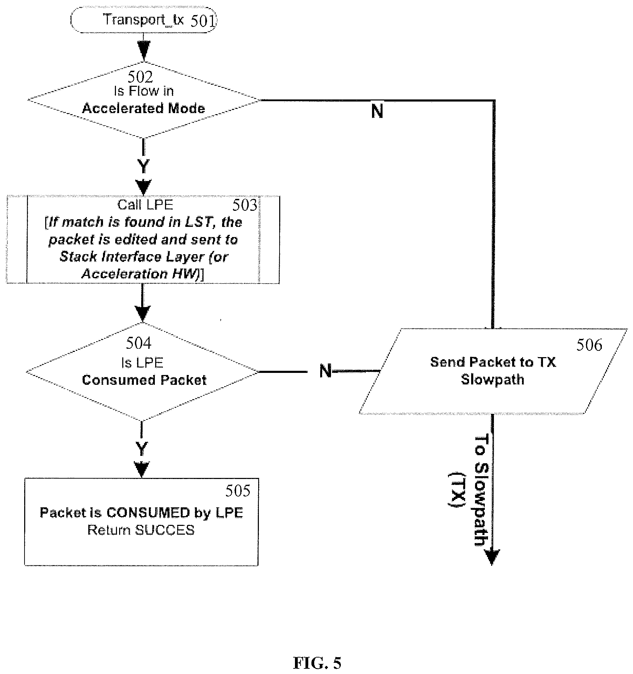

If a flow is in the accelerated mode, the transport layer sends the packets to the Litepath processing engine. Figure 5 shows a flow chart of a transport layer Tx adaptation in the OS network stack (as shown, for example, in Fig. 3 at 307). Upon receiving the packet from the transport layer in item 501, it is determined whether the flow is in the accelerated mode in item 502. If the flow is in the accelerated mode the Litepath processing engine gets the Tx flow information from the LST. If a flow match is found in the LST, the packet is edited using flow information and is sent to the Stack Device Interface Layer at 503. The Stack Device Interface Layer transmits the packet to the network device driver. It is further determined in step 504 whether the packet is enabled to be consumed and processed by the LPE. If the packet is enabled to be consumed by the LPE the packet is consumed by the LPE in item 505. Otherwise the packet is sent to the slow path in item 506. If the flow is not found in the LST and the flow is thus not in the accelerated mode as determined in item 502, the transport layer is controlled to transmit the packet through the slow path in item 506.

Furthermore, if the HW supports QoS functionality, the Litepath processing engine can make use of a HW QoS function by directly injecting the packet into a Network Interface Driver 311. If HW QoS functionality is not available, OS stack QoS mechanisms may be used.

Upon receiving the packet from the Network Interface Driver 311, the Stack Device Interface Layer 310 sends the packet by calling the Litepath processing engine Rx packet processing routine, which performs a Litepath Rx or slow path Rx based on whether the flow is enabled for the Litepath Rx or the slow path Rx.

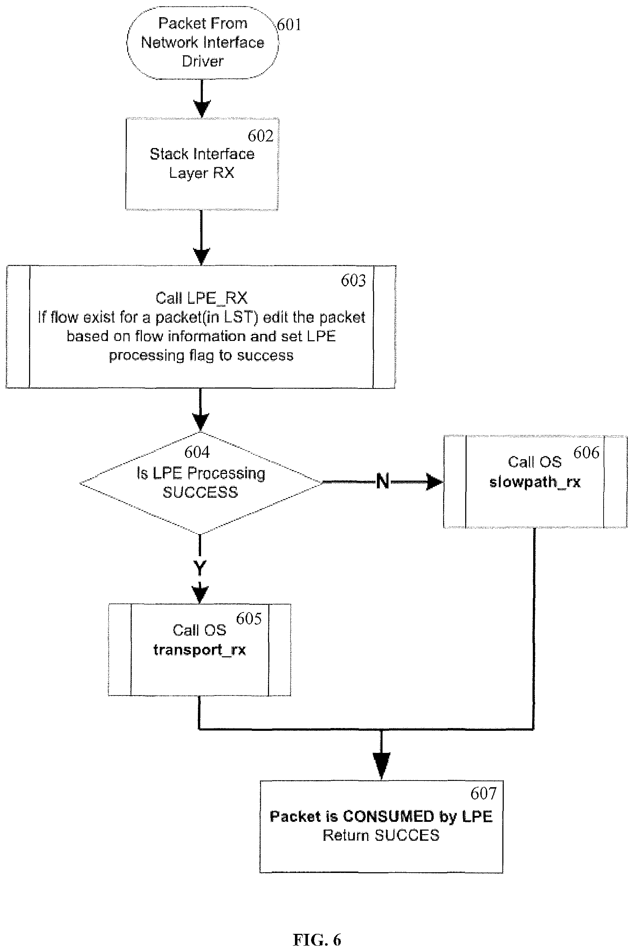

Figure 6 shows a flow chart of a transport layer Rx adaptation in the OS network stack (as shown, for example, in Fig. 3 at 307). The flow charts starts by receiving a packet from the network interface driver 311 in item 601 which subsequently goes through the stack interface layer 310 in item 602. If a flow for a given packet is found in the LST (item 603), the packet is validated and processed by Litepath processing engine 302. It is determined in item 604 whether the LPE processing is successful. Upon successful processing, the packet is sent to the transport layer 307 in item 605 using the same method used by the OS stack network layer to inject the packet into transport layer 307. If no Litepath match is found and no successful processing is determined in item 604, the Litepath processing engine 302 calls the stack Slowpath Rx routine in item 606. In item 607 the packet is consumed by the LPE.

Figure 7 shows a block diagram of a shortcut path and a slow path of local traffic in an OS network stack with acceleration hardware (HW) option, where an acceleration HW block 713 is further provided. The OS network stack shown in Fig. 7 corresponds to the OS network stack shown in Fig. 3. The socket 706, the transport layer 707, the network layer 708, the intermediate layers 709, the stack interface layer 710 and the network interface driver 711 which perform the same functions as the corresponding components presented in Fig. 3 are not described again with regard to Fig. 7. Instead it is referred to the differences including the application Litepath interfacing acceleration HW (block 713) which may be available in certain devices or products. The example shown in Fig. 7 represents a typical Application Litepath use case with acceleration engines (HW). The acceleration engines are programmed to direct Rx packets of locally terminated flows to the LPE 702. Tx packets are sent directly to the acceleration HW block 713 and packets are received in the LPE 702 from the Network Interface Device 712. In the example, the Network Interface Device layer is bypassed and packet editing/validating jobs are performed in HW. This greatly reduces the number of CPU cycles usually required for the packet.

In this approach the LPE module of the Application Litepath extends its functions to directly receive and transmit the packets to/from Acceleration HW block 713 through a dedicated physical (or logical) port of the HW that is assigned to Litepath. This allows the acceleration HW block 713 to send flows to Litepath port and receive flows from Litepath port. The LPE interface to acceleration HW can be embedded or can be realized through a separate acceleration engine driver.

Upon completing the learning phase, the LLB 701 may also program the acceleration HW forwarding and packet editing logic in comparison to the Litepath without Routing Acceleration HW.

The logic of the transport layer 707 in transport_Tx with acceleration HW is similar to the logic explained above with regard to Fig. 5. If the flow is in an accelerated mode, the transport layer sends the packets to the LPE 702. If the flow is not found in the LST 705 and therefore is not in the accelerated mode, the transport layer is controlled to transmit the packet through the slow-path. If the flow exists in the LST 705, the packet is directly sent to the Acceleration HW block 713 with metadata of the matched flow that the acceleration HW block 713 uses to find the flow in its table. The acceleration HW block 713 then modifies the packet and transmits it.

The acceleration HW block 713 is programmed to send packets of Rx flows of locally terminated connections to dedicated logical/physical port(s). Upon receiving the packet from the acceleration HW block 713 and if a match is found in the LST 705, the packet is modified using flow information from the LST 705 and then injected directly into the transport layer. Since the acceleration HW block 713 sends packets of a flow to the LPE 702 only if a locally terminated flow was programmed into it, it is unlikely that the flow entry does not exist in the LST 705. However, if no flow match is found for a packet, the LPE 702 sends the packet to the slow path.

VPN (Virtual Private Network) acceleration may be further realized in the embodiment shown in Fig. 7. In this case the encapsulation, decapsulation and VPN tunneling information is learnt by the LLB 701 during a learning phase and is stored as part of a flow entry in the LST 705. The LPE 702 uses this information as well as the cryptography engines (HW) and acceleration HW. The cryptographic hardware acceleration function may be included in the acceleration HW block 713 or in the separate hardware block which may be used by the acceleration HW block 713. If the acceleration HW block supports the cryptographic acceleration, the LPE 702 programs the acceleration HW block 713 with the required information to be used for the VPN flows. If the acceleration HW block 713 does not support the cryptographic acceleration, the LPE 702 may use cryptography engines for VPN flows and also leverage acceleration HW capabilities.

The flows may be removed from the LST 705 when the transport layer connection is terminated in the OS stack. The connection can be successfully terminated, by time out per transport layer protocol or can be abnormally closed by other components in the system. In all cases, when a transport layer connection is removed by the OS stack, both the Tx and Rx flows of the given connection are removed from the LST 705.

While some embodiments have been described in detail, it is to be understood that the aspects of the present disclosure can take many forms. In particular, the claimed subject matter may be practiced or implemented differently from the examples described and the described features and characteristics may be practiced or implemented in any combination.

The embodiments shown herein are intended to illustrate rather than to limit the invention as defined by the claims.

The following examples pertain to further embodiments.

Example 1 is a method of local traffic acceleration including: monitoring packet processing and header modification of a transport layer flow going through a network stack path of an operating system (OS); determining whether the transport layer flow can be processed by a processing engine based on the monitored packet processing and header modification; if it is determined that the transport layer flow can be processed by the processing engine, determining whether a flow learning phase is completed; wherein the flow learning phase includes learning protocol parameters by a learning block, the protocol parameters required to process a packet of the transport layer flow by the processing engine; if it is determined that the flow learning phase is completed, processing the packet of the transport layer flow by the processing engine using the protocol parameters learned by the learning block; and forwarding the processed packet via a shortcut path; and proceeding with learning the protocol parameters by the learning block, if it is determined that the flow learning phase is not completed;.

In example 2, the subject matter of Example 1 can optionally include the method wherein the packet is received from a network interface driver or a network interface hardware via an offload engine and forwarding the processed packet includes directly forwarding the processed packet to a transport layer.

In example 3, the subject matter of Example 1 can optionally include the method wherein the packet is received from the transport layer and forwarding the processed packet includes directly forwarding the processed packet to the network interface driver or the network interface hardware via the offload engine.

In example 4, the subject matter of any one of Examples 1-3 can optionally include the method wherein if it is determined that the transport layer flow can be processed by the processing engine, the transport layer flow is recorded in a session table.

In example 5, the subject matter of Example 4 can optionally include removing the transport layer flow from the session table, when a transport layer connection is terminated in the network stack path of the OS.

In example 6, the subject matter of any one of Examples 1-5 can optionally include the method wherein learning the protocol parameters includes collecting protocol header parameters required to construct a complete packet of the transport layer flow on top of transport layer data for a Tx session.

In example 7, the subject matter of any one of Examples 1-6 can optionally include the method wherein learning the protocol parameters includes collecting parameters that are necessary to validate and forward a received packet to the transport layer for a Rx session.

In example 8, the subject matter of any one of Examples 1-7 can optionally include storing the learned protocol parameters in a database to be used for processing subsequent transport layer flows packets and forwarding the processed packets once the flow learning phase is completed.

In example 9, the subject matter of any one of Examples 1-8 can optionally include the method wherein the shortcut path is further optimized by using at least one of: packet IP/TCP/UDP checksum offload, large packet send offload, large packet receive offload, acceleration routing and bridging function, TCP Ack suppression, hardware QoS function.

In example 10, the subject matter of any one of Examples 1-9 can optionally include, if the transport layer flow cannot be processed by the processing engine: marking the transport layer flow as non-shortcut; and terminating intercepting of packets of the transport layer flow by the learning block.

In example 11, the subject matter of any one of Examples 1-10 can optionally include the method wherein an indication not to consider the transport layer flow for acceleration through the shortcut path is received by the learning block from an external entity.

In example 12, the subject matter of Example 11 can optionally include the method wherein: the transport layer flow not to be considered is marked as non-shortcut from the beginning of the flow; and all packets of the marked transport layer flow are excluded from intercepting by the learning block.

In example 13, the subject matter of any one of Examples 1-12 can optionally include using a physical port number of the shortcut path for processing the packet of the transport layer flow by the processing engine, wherein the physical port number of the shortcut path is used as a destination port for TX flows or a source port for RX flows.

In example 14, the subject matter of Example 13 can optionally include creating the shortcut path in the OS network subsystem; and assigning the physical port number to the shortcut path in the processing engine.

In example 15, the subject matter of any one of Examples 1-14 can optionally include learning encapsulation, decapsulation and VPN tunneling information including encryption/decryption and authentication/hashing parameters by the learning block and storing the learned information in the session table.

Example 16 is an apparatus for local traffic acceleration, comprising a learning block and a processing engine, wherein the learning block is configured to: monitor packet processing and header modification of a transport layer flow going through a network stack path of an operating system (OS); determine whether the transport layer flow can be processed by the processing engine; and if it is determined that the transport layer flow can be processed by the processing engine, determine whether a flow learning phase is completed, wherein the flow learning phase includes learning protocol parameters by the learning block, the protocol parameters required to process a packet of the transport layer flow by the processing engine; and proceed with learning the protocol parameters, if it is determined that the flow learning phase is not completed; and the processing engine is configured to: process the packet of the transport layer flow using the learned protocol parameters; and forward the processed packet via a shortcut path.

In example 17, the subject matter of Example 16 can optionally include the apparatus wherein the processing engine further comprises a TCP ACK suppression sub-module and a packet offloading sub-module.

In example 18, the subject matter of any one of Examples 16-17 can optionally include the apparatus wherein the packet is received from a network interface driver or a network interface hardware via an offload engine and the processing engine is further configured to directly forward the processed packet to a transport layer.

In example 19, the subject matter of any one of Examples 16-17 can optionally include the apparatus wherein the packet is received from the transport layer and the processing engine is further configured to directly forward the processed packet to the network interface driver or the network interface hardware via the offload engine.

In example 20 the subject matter of any one of Examples 16-19 can optionally include a session table, wherein if it is determined that the transport layer flow can be processed by the processing engine, the learning block is further configured to record the transport layer flow in the session table.

In example 21, the subject matter of Examples 20 can optionally include the apparatus wherein the learning block is further configured to remove the transport layer flow from the session table, when a transport layer connection is terminated in the network stack path of the OS.

In example 22, the subject matter of any one of Examples 16-21 can optionally include the apparatus wherein the learning block is further configured to collect protocol header parameters required to construct a complete packet of the transport layer flow on top of transport layer data for a Tx session.

In example 23, the subject matter of any one of Examples 16-22 can optionally include the apparatus wherein the learning block is further configured to collect parameters that are necessary to validate and forward a received packet to the transport layer for a Rx session.

In example 24, the subject matter of any one of Examples 16-23 can optionally include a database configured to store the learned protocol parameters to be used for processing subsequent transport layer flows packets and forwarding the processed packets once the flow learning phase is completed.

In example 25, the subject matter of any one of Examples 16-24 can optionally include the apparatus wherein the shortcut path is further optimized by using at least one of: packet IP/TCP/UDP checksum offload, large packet send offload, large packet receive offload, acceleration routing and bridging function, TCP Ack suppression, hardware QoS function.

In example 26, the subject matter of any one of Examples 16-25 can optionally include the apparatus wherein, if the transport layer flow cannot be processed by the processing engine: the learning block is further configured to mark the transport layer flow as non-shortcut; and the processing engine is further configured to terminate intercepting of packets of the transport layer flow by the learning block.

In example 27, the subject matter of any one of Examples 16-26 can optionally include the apparatus wherein the learning block is further configured to receive an indication from an external entity not to consider the transport layer flow for acceleration through the shortcut path.

In example 28, the subject matter of Example 27 can optionally include the apparatus wherein: the transport layer flow not to be considered is marked as non-shortcut from the beginning of the flow; and all packets of the marked transport layer flow are excluded from intercepting by the learning block.

In example 29, the subject matter of any one of Examples 16-28 can optionally include the apparatus wherein the processing engine is further configured to use a physical port number of the shortcut path for processing the packet of the transport layer flow, wherein the physical port number of the shortcut path is used as a destination port for TX flows or a source port for RX flows.

In example 30, the subject matter of Example 29 can optionally include the apparatus wherein the processing engine is further configured to: create the shortcut path in the OS network subsystem; and assign the physical port number to the shortcut path.

In example 31, the subject matter of any one of Examples 16-30 can optionally include the apparatus wherein the learning block is further configured to learn encapsulation, decapsulation and VPN tunneling information including encryption/decryption and authentication/hashing parameters and store the learned information in the session table.

Example 32 is at least one machine readable medium comprising a plurality of instructions that in response to being executed on a computing device, cause the computing device to: monitor packet processing and header modification of a transport layer flow going through a network stack path of an operating system (OS); determine whether the transport layer flow can be processed by a processing engine based on the monitored packet processing and header modification; if it is determined that the transport layer flow can be processed by the processing engine, determine whether a flow learning phase is completed, wherein the flow learning phase includes learning protocol parameters by a learning block, the protocol parameters required to process a packet of the transport layer flow by the processing engine; if it is determined that the flow learning phase is completed, process the packet of the transport layer flow by the processing engine using the protocol parameters learned by the learning block; and forward the processed packet via a shortcut path; and proceed with learning the protocol parameters by the learning block, if it is determined that the flow learning phase is not completed.

In example 33, the subject matter of Example 32 can optionally include the machine readable medium wherein the packet is received from a network interface driver or a network interface hardware via an offload engine and forwarding the processed packet includes directly forwarding the processed packet to a transport layer.

In example 34, the subject matter of Example 32 can optionally include the machine readable medium wherein the packet is received from the transport layer and forwarding the processed packet includes directly forwarding the processed packet to the network interface driver or the network interface hardware via the offload engine.

In example 35, the subject matter of any one of Examples 32-34 can optionally include the machine readable medium wherein if it is determined that the transport layer flow can be processed by the processing engine, the transport layer flow is recorded in the session table.

In example 36, the subject matter of Example 35 can optionally include the machine readable medium wherein when a transport layer connection is terminated in the network stack path of the OS, the transport layer flow is removed from the session table.

In example 37, the subject matter of any one of Examples 32-36 can optionally include the machine readable medium wherein learning the protocol parameters includes collecting protocol header parameters required to construct a complete packet of the transport layer flow on top of transport layer data for a Tx session.

In example 38, the subject matter of any one of Examples 32-37 can optionally include the machine readable medium wherein learning the protocol parameters includes collecting parameters that are necessary to validate and forward a received packet to the transport layer for a Rx session.

In example 39, the subject matter of any one of Examples 32-38 can optionally include the machine readable medium wherein the learned protocol parameters are stored in a database to be used for processing subsequent transport layer flows packets and forwarding the processed packets once th flow learning phase is completed.

In example 40, the subject matter of any one of Examples 32-39 can optionally include the machine readable medium wherein the shortcut path is further optimized by using at least one of: packet IP/TCP/UDP checksum offload, large packet send offload, large packet receive offload, acceleration routing and bridging function, TCP Ack suppression, hardware QoS function.

In example 41, the subject matter of any one of Examples 32-40 can optionally include the machine readable medium wherein if the transport layer flow cannot be processed by the processing engine: the transport layer flow is marked as non-shortcut; and intercepting of packets of the transport layer flow by the learning block is terminated.

In example 42, the subject matter of any one of Examples 32-41 can optionally include the machine readable medium wherein an indication not to consider the transport layer flow for acceleration through the shortcut path is received by the learning block from an external entity.

In example 43, the subject matter of Example 42 can optionally include the machine readable medium wherein: the transport layer flow not to be considered is marked as non-shortcut from the beginning of the flow; and all packets of the marked transport layer flow are excluded from intercepting by the learning block.

In example 44, the subject matter of any one of Examples 32-43 can optionally include the machine readable medium wherein the packet of the transport layer flow is processed by the processing engine using a physical port number of the shortcut path, wherein the physical port number of the shortcut path is used as a destination port for TX flows or a source port for RX flows.

In example 45, the subject matter of Example 44 can optionally include the machine readable medium wherein: the shortcut path is created in the OS network subsystem; and the physical port number is assigned to the shortcut path in the processing engine.

In example 46, the subject matter of any one of Examples 32-45 can optionally include the machine readable medium wherein encapsulation, decapsulation and VPN tunneling information including encryption/decryption and authentication/hashing parameters is further learned by the learning block and stored in the session table.

## Claims

1. A method (100) of local traffic acceleration including:
monitoring (101) packet processing and header modification of a transport layer flow going through a network stack path of an operating system (OS);
determining (102) whether the transport layer flow can be processed by a processing engine based on the monitored packet processing and header modification;
if it is determined that the transport layer flow can be processed by the processing engine, determining (103) whether a flow learning phase is completed, wherein the flow learning phase includes learning protocol parameters by a learning block, the protocol parameters required to process a packet of the transport layer flow by the processing engine;
if it is determined that the flow learning phase is completed,
processing (104) the packet of the transport layer flow by the processing engine using the protocol parameters learned by the learning block; and
forwarding (105) the processed packet via a shortcut path; and
proceeding (106) with learning the protocol parameters by the learning block, if it is determined that the flow learning phase is not completed.

2. The method of claim 1, wherein forwarding the processed packet includes:
directly forwarding the processed packet to a transport layer, when the packet is received from a network interface driver or a network interface hardware via an offload engine; and
directly forwarding the processed packet to the network interface driver or the network interface hardware via the offload engine, when the packet is received from the transport layer.

3. The method of any of claims 1-2, wherein the transport layer flow is recorded in a session table, if it is determined that the transport layer flow can be processed by the processing engine, and the transport layer flow is further removed from the session table, when a transport layer connection is terminated in the network stack path of the OS.

4. The method of any of claims 1-3, wherein learning the protocol parameters includes collecting protocol header parameters required to construct a complete packet of the transport layer flow on top of transport layer data for a TX session and collecting parameters that are necessary to validate and forward a received packet to the transport layer for a RX session.

5. The method of any of claims 1-4, further including, if the transport layer flow cannot be processed by the processing engine:
marking the transport layer flow as non-shortcut; and
terminating intercepting of packets of the transport layer flow by the learning block.

6. The method of any of claims 1-5, wherein:
an indication not to consider the transport layer flow for acceleration through the shortcut path is received by the learning block from an external entity;
the transport layer flow not to be considered is marked as non-shortcut from the beginning of the flow; and
all packets of the marked transport layer flow are excluded from intercepting by the learning block.

7. The method of any of claims 1-6, further including:
using a physical port number of the shortcut path for processing the packet of the transport layer flow by the processing engine, wherein the physical port number of the shortcut path is used as a destination port for TX flows or a source port for RX flows;
creating the shortcut path in the OS network subsystem; and
assigning the physical port number to the shortcut path in the processing engine.

8. At least one machine readable medium comprising a plurality of instructions that in response to being executed on a computing device, cause the computing device to implement a method as claimed in any of claims 1-7.

9. An apparatus (200) for local traffic acceleration, comprising a learning block (201) and a processing engine (202), wherein
the learning block (201) is configured to:
monitor packet processing and header modification of a transport layer flow going through a network stack path of an operating system (OS);
determine whether the transport layer flow can be processed by the processing engine (202); and
if it is determined that the transport layer flow can be processed by the processing engine (202), determine whether a flow learning phase is completed, wherein the flow learning phase includes learning protocol parameters by the learning block (201), the protocol parameters required to process a packet of the transport layer flow by the processing engine (202); and
proceed with learning the protocol parameters, if it is determined that the flow learning phase is not completed; and
the processing engine (202) is configured to:
process the packet of the transport layer flow using the learned protocol parameters; and
forward the processed packet via a shortcut path.

10. The apparatus of claim 9, wherein the processing engine (202) further comprises a TCP ACK suppression sub-module (203) and a packet offloading sub-module (204).

11. The apparatus of any of claims 9-10, further comprising a session table (205), wherein the learning block (201) is further configured to record the transport layer flow in the session table (205), if it is determined that the transport layer flow can be processed by the processing engine (202), and to remove the transport layer flow from the session table (205), when a transport layer connection is terminated in the network stack path of the OS.

12. The apparatus of any of claims 9-11, wherein the learning block (201) is further configured to:
collect protocol header parameters required to construct a complete packet of the network layer flow on top of transport layer data for a TX session; and
collect parameters that are necessary to validate and forward a received packet to the transport layer for a RX session.

13. The apparatus of any of claims 9-12, further comprising a database configured to store the learned protocol parameters to be used for processing subsequent transport layer flows packets and forwarding the processed packets once the flow learning phase is completed.

14. The apparatus of any of claims 9-13, wherein, if the network layer flow cannot be processed by the processing engine (202):
the learning block (201) is further configured to mark the network layer flow as non-shortcut; and
the processing engine (202) is further configured to terminate intercepting of packets of the network layer flow by the learning block (201).

15. The apparatus of any of claims 9-14, wherein the processing engine (202) is further configured to:
use a physical port number of the shortcut path for processing the packet of the network layer flow, wherein the physical port number of the shortcut path is used as a destination port for TX flows or a source port for RX flows;
create the shortcut path in the OS network subsystem; and
assign the physical port number to the shortcut path.
